Europäisches Patentamt

European Patent Office

Office européen des brevets

(11) Veröffentlichungsnummer: **0 437 709 B1**

(12) **EUROPÄISCHE PATENTSCHRIFT**

(45) Veröffentlichungstag der Patentschrift: **20.07.94**

(21) Anmeldenummer: **90122763.7**

(22) Anmeldetag: **28.11.90**

(51) Int. Cl.⁵: **H02G 1/08**, G02B 6/44

(54) Langgestrecktes Element zum Einziehen in ein Rohr und Verfahren zur Anwendung hierfür.

(30) Priorität: **15.01.90 DE 4000930**

(43) Veröffentlichungstag der Anmeldung:
**24.07.91 Patentblatt 91/30**

(45) Bekanntmachung des Hinweises auf die
Patenterteilung:
**20.07.94 Patentblatt 94/29**

(84) Benannte Vertragsstaaten:
**BE DE FR GB IT NL**

(56) Entgegenhaltungen:
**DE-A- 2 604 775**
**DE-U- 8 420 070**
**US-A- 4 083 533**

(73) Patentinhaber: **SIEMENS AKTIENGESELL-
SCHAFT**
**Wittelsbacherplatz 2**
**D-80333 München(DE)**

(72) Erfinder: **Oestreich, Ulrich, Dipl.-Ing.**
**Karl-Witthalm-Strasse 15**
**W-8000 München 71(DE)**

EP 0 437 709 B1

**Beschreibung**

Die Erfindung betrifft ein langgestrecktes Element zum Einziehen in ein Rohr, wobei ein strömendes Medium unter Druck in das Rohr eingepreßt und das langgestreckte Element durch auf dessen Oberfläche einwirkende Strömungskräfte des strömenden Mediums getragen und durch das Rohr bewegt wird und wobei am Emde des langgestreckten Elementes ein Ansatz angebracht ist, dessen Flexibilität größer ist als die des langgestreckten Elementes.

Unter einem langgestreckten Element sind insbesonders elektrische und/oder optische Leiter sowie elektrische und/oder optische Kabel und gegebenenfalls Einzugsseile oder dergleichen zu verstehen.

Aus der US-A-4 083 533 ist ein in ein Rohr einzuziehendes langgestrecktes Zugelement bekannt, das am Ende eine Zugöse aufweist, an der eine aus nachgiebigen Material bestehende Kugel befestigt ist. Der Durchmesser dieser Kugel ist so gewählt, daß sie rundum an der Innenwand des Rohres anliegt und so dessen Querschnitt dichtend in der Art eines Kolbens ausfüllt. Durch einen z.B. mittels komprimierter Luft erzeugten Überdruck wird das langgestreckte Zugelement vorwärts bewegt. Ein derartiger Kolben setzt aber voraus, daß der Rohrquerschnitt überall im wesentlichen kreisförmig bleibt, was nicht immer gewährleistet ist. Außerdem besteht die Gefahr, daß durch irgendwelche vorstehenden Teile der weiche kugelförmige Kolben aufgerissen und beschädigt wird, wodurch die Abdichtung nicht mehr gewährleistet ist.

Aus dem DE-U-84 20 070 ist eine Vorrichtung zum nachträglichen Einziehen von Kabeln in bereits mit mindestens einem Kabel bestückte Schutzrohre beschrieben, die aus einem in das Schutzrohr einziehbares Leerrohr besteht, das zur frontseitigen Führung mit einem auf das Leerrohr gesteckten gerundeten Stopfen versehen ist.

Aus der DE-OS 26 04 775 ist es bekannt, ein langgestrecktes Element unter dem Einfluß eines strömenden Mediums in einem Rohr fortzubewegen. Diese Längsbewegung wird durch auf die Oberfläche des langgestreckten Elementes einwirkende Strömungskräfte des Mediums bewirkt.

Eine Schwierigkeit beim Einziehen von langgestreckten Elementen kann darin bestehen, daß im Inneren des Rohres, z.B. durch eine Beschädigung oder dergleichen, Verengungen auftreten und/oder daß z.B. im Bereich von Krümmungen die Fortbewegung des langgestreckten Elementes erschwert wird. Dies ist insbesondere dann der Fall, wenn das langgestreckte Element selbst eine gewisse Steifigkeit aufweist und/oder wenn z.B. in dem Rohr bereits andere Elemente untergebracht sind und ein zusätzliches Einziehen eines weiteren Elementes erforderlich wird.

Der vorliegenden Erfindung liegt die Aufgabe zugrunde, das Einführen eines langgestreckten Elementes in ein Rohr zu erleichtern und sicherer zu gestalten. Gemäß der Erfindung wird diese Aufgabe bei einem langgestreckten Element der eingangs genannten Art dadurch gelöst, daß die Länge des Ansatzes größer als 1 m gewählt ist, daß der Ansatz in Richtung auf sein Ende hin eine Zunahme der Flexibilität aufweist und daß dem Ansatz infolge des strömenden Mediums eine Flatterbewegung ermöglicht ist.

Während die mechanischen Eigenschaften, also insbesondere der Durchmesser und die Steifigkeit des langgestreckten Elementes durch die jeweiligen Anforderungen vorgegeben sind, ist es durch die Erfindung möglich, unabhängig von dieser Vorgabe eine optimale Gestaltung des frontseitigen Endes des einzuziehenden Elementes mittels des Ansatzes vorzunehmen und dadurch den Einziehvorgang als solchen zu erleichtern bzw. das Überwinden von Engstellen oder Krümmungen überhaupt erst zu ermöglichen. Dadurch können langgestreckte Elemente in einfacher Weise und auch z.B. in größere Rohrlängen eingezogen werden und es ist gegebenenfalls sogar möglich, mit einem geringerem Einpreßdruck für das strömende Medium zu arbeiten, weil das frontseitige Ende des langgestreckten Elementes durch den Ansatz optimal ausgestaltet werden kann. Durch die Erfindung wird gewährleistet, daß beim Angreifen einer Biegekraft am Ende etwa gleichmäßige, der Rohrkrümmung angepaßte Element-Krümmungen entstehen.

Die Erfindung betrifft weiterhin ein Verfahren zur Anwendung bei einem langgestreckten Element nach der Erfindung, welches dadurch gekennzeichnet ist, daß an dem freien Ende des Elementes zu Führungszwecken ein Ansatz von mindestens 1 m Länge angebracht wird, dessen Flexibilität in Richtung auf sein freies Ende hin zunehmend größer wird, daß dieser Ansatz zuerst und dann das langgestreckte Element in das Rohr eingeführt wird und daß durch das strömende Medium der Ansatz in eine Flatterbewegung versetzt wird.

Sonstige Weiterbildungen der Erfindung sind in Unteransprüchen wiedergegeben.

Die Erfindung und ihre Weiterbildungen werden nachfolgend anhand von Zeichnungen näher erläutert. Es zeigen:

Fig. 1 in einer Gesamtdarstellung den Einziehvorgang eines erfindungsgemäßen langgestreckten Elementes in ein Rohr und

Fig. 2 Einzelheiten über die Anbringung des Ansatzes an dem langgestreckten Element

2

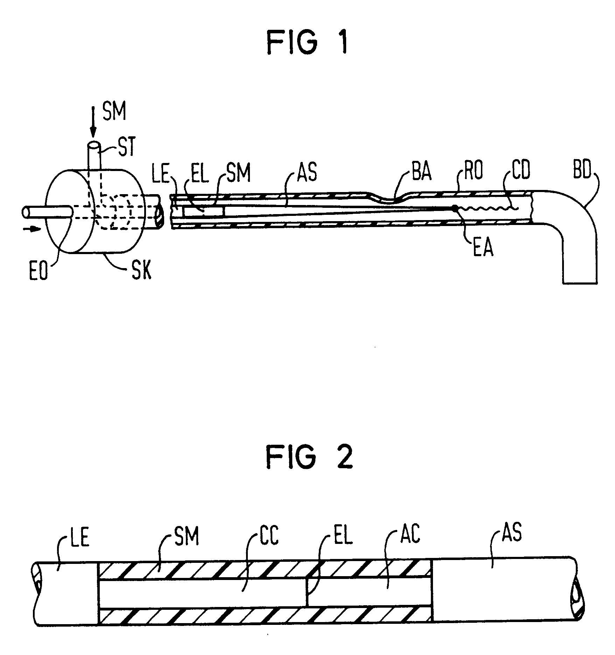

In Fig. 1 ist ein vorzugsweise aus Kunststoff bestehendes Rohr mit RO bezeichnet, das vorzugsweise mehrteilig in einer größeren Länge, vorzugsweise zwischen 50 m und 1000 m verlegt ist. In dieses Rohr ist ein langgestrecktes Element LE einzuziehen, insbesonders in Form eines elektrischen und/oder optischen Leiters bzw. eines elektrischen und/oder optischen Kabels.

Am eingangsseitigen Ende des Rohres RO ist eine Schutzkappe SK dicht aufgebracht, welcher in axialer Richtung durch eine stirnseitige Eintrittsöffnung EO das langgestreckte Element LE zugeführt wird. Dieses langgestreckte Element LE kann z.B. Durchmesserwerte zwischen 2 und 12 mm aufweisen (etwa bei einem optischen Kabel).

Das langgestreckte Element LE wird von einem hier nicht dargestellten Vorratsstapel, z.B. einer Spule oder dergleichen abgezogen und wird mit einem zusätzlichen Längsschub in die Schutzkappe SK eingeführt.

Über einen Anschlußstutzen ST wird ein strömendes Medium SM, insbesondere ein Gas, unter hohem Druck zugeführt, und sowohl das strömende Medium SM als auch das langgestreckte Element LE gelangen in das Innere des Rohres RO.

Wenn das langgestreckte Element LE eine gewisse Steifigkeit und/oder einen größeren Querschnitt aufweist, dann kann es an Störstellen im Bereich des Rohres, z.B. bei einer Verengung BA oder bei einer scharfen Krümmung BD zu Schwierigkeiten kommen, weil sich dort das langgestreckte Element möglicherweise aufspießt. Außerdem ist, wenn im Inneren des Rohres RO bereits langgestreckte Elemente bei früheren Verlegungsvorgängen vorhanden sind, die Lage dieser früher eingeführten Elemente undefiniert und es ist für das neu einzuführende Element LE schwierig, sich einen Weg zu suchen.

Hier ist eine Abhilfe gemäß der Erfindung dadurch erreicht, daß ein Ansatz AS vorgesehen ist. Dieser Ansatz AS weist eine Länge von mehr als 1 m auf, vorzugsweise zwischen 1 und 5 m und maximal etwa 20 m. Der Ansatz weist eine größere Flexibilität als das langgestreckte Element LE auf. Vorzugsweise ist der Ansatz peitschenartig gestaltet, d.h. sein Durchmesser verringert sich beginnend am stirnseitigen Ende EL des langgestreckten Elementes LE bis hin zu seinem Ende EA fortlaufend, vorzugsweise gleichmäßig. Damit geht eine Verringerung des Widerstandsmomentes einher. Ein geringeres Widerstandsmoment hat außerdem zur Folge, daß die "Flatterbewegung" des Ansatzes AS infolge des strömenden Mediums vergrößert wird, wodurch die Überwindung von Verengungen wie BA oder Krümmungen wie BD im starken Maße erleichtert ist. Es ist auch möglich, den Ansatz AS so auszugestalten, daß sein Elastizitätsmodul in Richtung auf sein Ende EA hin abnimmt.

Die Flexibilität am Ende EA des Ansatzes AS sollte zwischen dem 10- bis 100-fachen der Flexibilität am Anfang des Ansatzes AS betragen.

Der Ansatz AS sollte zweckmäßig aus einem biegeelastischen Material bestehen und der Durchmesser und/oder der E-Modul im Bereich des Endes EA des peitschenförmigen Ansatzes AS sollte bei 10 % des Durchmessers bzw. des E-Moduls des langgestreckten Elementes LE liegen.

Das mit dem wirksamen E-Modul multiplizierte Widerstandsmoment im Bereich des Endes EA für den peitschenförmigen Ansatzes AS sollte zweckmäßig zwischen 0,1 und 10 % des Wertes des langgestreckten Elementes betragen, so daß das zu der Spitze hin abnehmende Biegemoment (Strömungskraft mal Hebelarm) stets etwa die gleiche Biegung je Längeneinheit erzeugt.

Es besteht auch die Möglichkeit, zusätzlich an das Ende des Ansatzes AS eine Kordel oder Schnur CD anzubringen, und dadurch die Möglichkeit der "Flatterbewegung" infolge des strömenden Mediums zusätzlich zu verbessern und so den Einziehvorgang zu erleichtern und sicherer zu machen. Es kann auch so vorgegangen werden, daß an dem Ende EL des langgestreckten Elementes direkt ein schnur- oder kordelartiger Ansatz angebracht wird.

Die üblichen Schutzkappen oder dergleichen, welche am Ende von Kabeln oder Leitungen vielfach angebracht werden und die sich nur gegebenenfalls wenige Zentimeter über das stirnseitige Ende EL des jeweiligen Elementes LE hinaus erstrecken reichen keinesfalls aus, um die durch die Erfindung beabsichtigte Wirkung zu gewährleisten.

Der Durchmesser an Ende EA des Ansatzes AS sollte zweckmäßig zwischen 0,1 mm und 1 mm gewählt werden.

Im Bereich der Befestigungsstelle des Ansatzes AS an dem langgestreckten Element LE sollte der Durchmesser zweckmäßigerweise nur geringfügig oder gar nicht vergrößert werden, um den Einziehvorgang nicht zu erschweren. Im einfachsten Fall kann als Verbindungselement SM eine Schrumpfmuffe aufgebracht werden, welche die Verbindung zwischen dem Ansatz AS und dem langgestreckten Element LE herstellt. Dabei ist zu berücksichtigen, daß sehr große Zugkräfte durch den Ansatz AS auf das langgestreckte Element LE ja üblicher Weise nicht ausgeübt werden, so daß die Beanspruchung des Verbindungselementes SM relativ gering gehalten werden kann. Die Biegung am Ende des langgestreckten Elementes LE sollte knickfrei auf die Biegung des peitschenförmigen Ansatzes AS übergehen.

In Fig. 2 ist dargestellt, wie eine Veränderung des Außendurchmessers völlig vermieden werden kann. Im Bereich des stirnseitigen Endes EL ist das langgestreckte Element LE in seinem Außendurchmesser verringert, z.B. bei einem Kabel durch Entfernen des Außenmantels. Das verbleibende Kernelement (z.B. die Kabelseele) CC ist in seinem Durchmesser ebenso groß gewählt wie das verjüngte Endteil AC des Ansatzes AS. Über diese Endbereiche CC und AC wird das Verbindungsglied SM, z.B. in Form einer Schrumpfmuffe aufgebracht und befestigt. Es ist auch möglich, Klebeverbindungen vorzusehen oder Quetschverbindungen. Weiterhin ist es auch möglich, das Ende des Ansatzes AS z.B. mit einer selbstschneidenden Schraube in das stirnseitige Ende EL des langgestreckten Elementes LE einzudrehen usw. Die mechanischen Eigenschaften des Ansatzes AS im Bereich des stirnseitigen Endes EL sollten etwa denen des langgestreckten Elementes LE entsprechen. Die Verringerung z.B. des Durchmessers für den Ansatz AS erfolgt zweckmäßig stetig, d.h. in Form eines "Peitschenstiels". Der Ansatz AS besteht zweckmäßiger Weise aus einem Kunststoff, wobei im Falle der Verwendung eines Kabels folgende Materialkombinationen zweckmäßig sind:

```
LE: weiches Kabel              Ansatz: bestehend aus LDPE
                                       oder Polytetrafluorethylen

LE: Schichtenmantelkabel       Ansatz AS: besteht aus HDPE, PP
                                       oder PA
```

Bezüglich der Biegefähigkeit des langgestreckten Elementes LE und der Eigenschaften des Ansatzes AS kann zweckmäßig von folgenden Überlegungen ausgegangen werden:

Für eine etwa kreisförmige Krümmung und Verwendung eines Kabels als langgestrecktes Element LE gilt

$$\frac{1}{\rho} = \frac{M}{E \cdot J} \quad , \quad wobei \tag{1}$$

$\rho$ = Krümmungsradius (m)
M = Biegemoment (N . m)
E = E-Modul (N/m$^2$)
J = äquat. Flächenträgheitsmoment (m$^4$) ist.

Für praktische Fälle ist anzusetzen $\rho \sim 0,5$ m (als Mittelwert). Es gilt: M = F . $\rho$ .

Dabei ist F die durch die Luftgeschwindigkeit erzeugte Kraft je Längeneinheit, ca. 1 N. E liegt für Kabelmäntel bei ca. 300 MN/m$^2$, für Adermaterialien bei ca. 2000 MN/m$^2$.

Es gilt: J = $\frac{\pi}{64}$ (D$^4$ - d$^4$).

Dabei ist D der Außendurchmesser (z.B. des Kabelmantels) und d der Innendurchmesser der betrachteten Schicht.

Die Durchmesser D von LE liegen zwischen 5 und 10 mm.

Daraus ergibt sich $\Sigma$ E . J zwischen 1 . 10$^4$ und 2,5 . 10$^5$ (N . mm$^2$) oder zwischen 10$^{-2}$ und 0,25 (N . m$^2$).

Dieser Wert sollte möglichst ohne nennenswerten Verlustanteil erzielt werden. Der Verlustanteil des Biegemomentes ist bei Rückformung in einen geraden Streckenteil erneut aufzubringen.

Die Ausformung des Ansatzes AS geschieht ebenfalls nach (1), wobei der Hebelarm für M variabel und zum Ende EA hin immer kleiner wird.

Es ergibt sich für den Ansatz AS etwa ein (leicht gerundeter) Körper etwa gleicher Biegefestigkeit. Am einfachsten ist ein sich kegelförmig verjüngender Körper für den Ansatz AS herstellbar.

**Patentansprüche**

1. Langgestrecktes Element (LE) zum Einziehen in ein Rohr (RO), wobei ein strömendes Medium (SM) unter Druck in das Rohr (RO) eingepreßt und das langgestreckte Element (LE)
   durch auf dessen Oberfläche einwirkende Stömungskräfte des strömenden Mediums (SM) getragen und durch das Rohr (RO) bewegt wird und wobei

am Ende des langgestreckten Elementes (LE) ein Ansatz (AS) angebracht ist, dessen Flexibilität größer ist als die des langgestreckten Elementes (LE)
**dadurch gekennzeichnet,**
daß die Länge des Ansatzes (AS) größer als 1 m gewählt ist, daß der Ansatz (AS) in Richtung auf sein Ende (EA) hin eine Zunahme der Flexibilität aufweist,
und daß dem Ansatz (AS) infolge des strömenden Mediums (SM) eine Flatterbewegung ermöglicht ist.

2. Langgestrecktes Element nach Anspruch 1,
   **dadurch gekennzeichnet,**
   daß der Durchmesser des Ansatzes (AS) in Richtung auf ein freies Ende (EA) hin abnimmt.

3. Langgestrecktes Element nach einem der vorhergehenden Ansprüche,
   **dadurch gekennzeichnet,**
   daß der Elastizitätsmodul des Ansatzes (AS) in Richtung auf das freie Ende (EA) hin abnimmt.

4. Langgestrecktes Element nach einem der vorhergehenden Ansprüche,
   **dadurch gekennzeichnet,**
   daß das Flächenträgheitsmoment des Ansatzes (AS) in Richtung auf das freie Ende (EA) hin abnimmt.

5. Langgestrecktes Element (LE) nach einem der vorhergehenden Ansprüche,
   **dadurch gekennzeichnet,**
   daß die Länge des Ansatzes (AS) zwischen 1 und 20 m, gewählt wird.

6. Langgestrecktes Element nach Anspruch 5,
   **dadurch gekennzeichnet,**
   daß die Länge des Ansatzes (AS) zwischen 1 und 5 Metern gewählt ist.

7. Langgestrecktes Element nach einem der vorhergehenden Ansprüche,
   **dadurch gekennzeichnet,**
   daß der Ansatz (AS) aus einem biegeelastischen Material besteht.

8. Langgestrecktes Element nach einem der vorhergehenden Ansprüche,
   **dadurch gekennzeichnet,**
   daß das freie Ende (EA) des Ansatzes (AS) einen Durchmesser zwischen 0,1 und 1 mm aufweist.

9. Langgestrecktes Element nach einem der vorhergehenden Ansprüche,
   **dadurch gekennzeichnet,**
   daß die Flexibilität am Ende (EA) des Ansatzes (AS) zwischen dem 10- bis 100-fachen der Flexibilität am Anfang des Ansatzes (AS) gewählt ist.

10. Langgestrecktes Element nach einem der vorhergehenden Ansprüche,
    **dadurch gekennzeichnet,**
    daß im Bereich der Befestigungsstelle am stirnseitigen Ende (EL) des langgestreckten Elementes (LE) der Ansatz (AS) etwa den gleichen Querschnitt aufweist wie das langgestreckte Element (LE).

11. Langgestrecktes Element nach einem der vorhergehenden Ansprüche,
    **dadurch gekennzeichnet,**
    daß die mechanischen Eigenschaften des Ansatzes (AS) im Bereich der Befestigungsstelle (SM) am stirnseitigen Ende (EL) des langgestreckten Elementes (LE) etwa mit denen des Elementes (LE) übereinstimmen.

12. Langgestrecktes Element nach einem der vorhergehenden Ansprüche,
    **dadurch gekennzeichnet,**
    daß der Ansatz (AS) aus einem Kunststoff besteht.

13. Langgestrecktes Element nach einem der vorhergehenden Ansprüche,
    **dadurch gekennzeichnet,**
    daß das langgestreckte Element (LE) ein Leiter oder ein Kabel ist.

**14.** Langgestrecktes Element nach Anspruch 13,
**dadurch gekennzeichnet,**
daß das langgestreckte Element (LE) ein optischer Leiter oder ein optisches Kabel ist.

**15.** Langgestrecktes Element nach einem der Ansprüche 13 oder 14,
**dadurch gekennzeichnet,**
daß für weiche Kabel mit einem einfachen Mantel der Ansatz (AS) aus einem LDPE oder aus Polytetrafluorethylen besteht.

**16.** Langgestrecktes Element nach einem der Ansprüche 13 oder 14,
**dadurch gekennzeichnet,**
daß für Schichtenmantelkabel der Ansatz (AS) aus HDPE, aus Polypropylen oder aus einem Polyamid besteht.

**17.** Langgestrecktes Element,
**dadurch gekennzeichnet,**
daß an seinem Ende oder am Ende des Ansatzes (AS) nach einem der vorhergehenden Ansprüche ein schnur- oder kordelartiger Fortsatz angebracht ist.

**18.** Verfahren zur Anwendung bei einem langgestreckten Element (LE) nach einem der vorhergehenden Ansprüche,
**dadurch gekennzeichnet,**
daß an dem freien Ende (EL) des Elementes zu Führungszwecken ein Ansatz (AS) von mindestens 1 m Länge angebracht wird,
dessen Flexibilität in Richtung auf sein freies Ende (EA) hin zunehmend größer wird,
daß dieser Ansatz (AS) zuerst und dann das langgestreckte Element (LE) in das Rohr (RO) eingeführt wird und daß durch das strömende Medium (SM) der Ansatz (AS) in eine Flatterbewegung versetzt wird.

**Claims**

**1.** Elongate element (LE) for drawing into a tube (RO), a flowing medium (SM) being pressed into the tube (RO) under pressure and the elongate element (LE) being carried by the flow forces of the flowing medium (SM) which act on the surface of said element and being moved through the tube (RO), and an attachment (AS) being fixed on the end of the elongate element (LE), the fixability of said attachment being greater than that of the elongate element (LE), characterized in that the length selected for the attachment (AS) is greater than 1 m, in that the attachment (AS) exhibits an increase in flexibility in the direction of its end (EA), and in that a fluttering movement is made possible for the attachment (AS) owing to the flowing medium (SM).

**2.** Elongate element according to Claim 1, characterized in that the diameter of the attachment (AS) decreases in the direction of a free end (EA).

**3.** Elongate element according to one of the preceding claims, characterized in that the modulus of elasticity of the attachment (AS) decreases in the direction of the free end (EA).

**4.** Elongate element according to one of the preceding claims, characterized in that the moment of plane area of the attachment (AS) decreases in the direction of the free end (EA).

**5.** Elongate element (LE) according to one of the preceding claims, characterized in that the length selected for the attachment (AS) is between 1 and 20 m.

**6.** Elongate element according to Claim 5, characterized in that the length selected for the attachment (AS) is between 1 and 5 metres.

**7.** Elongate element according to one of the preceding claims, characterized in that the attachment (AS) comprises a flexible material.

8. Elongate element according to one of the preceding claims, characterized in that the free end (EA) of the attachment (AS) exhibits a diameter of between 0.1 and 1 mm.

9. Elongate element according to one of the preceding claims, characterized in that the flexibility selected for the end (EA) of the attachment (AS) is between 10 to 100 times the flexibility at the start of the attachment (AS).

10. Elongate element according to one of the preceding claims, characterized in that, in the area of the mounting position at the end (EL) on the end face side of the elongate element (LE), the attachment (AS) exhibits approximately the same cross-section as the elongate element (LE).

11. Elongate element according to one of the preceding claims, characterized in that, in the area of the mounting position (SM) at the end (EL) on the end face side of the elongate element (LE), the mechanical properties of the attachment (AS) approximately match those of the element (LE).

12. Elongate element according to one of the preceding claims, characterized in that the attachment (AS) comprises a plastic.

13. Elongate element according to one of the preceding claims, characterized in that the elongate element (LE) is a conductor or a cable.

14. Elongate element according to Claim 13, characterized in that the elongate element (LE) is an optical fibre or an optical cable.

15. Elongate element according to one of Claims 13 or 14, characterized in that for soft cables having a single sheath the attachment (AS) comprises an LDPE or a polytetrafluoroethylene.

16. Elongate element according to one of Claims 13 or 14, characterized in that for cables with aluminium/polyester foil shields the attachment (AS) comprises HDPE, polypropylene, or a polyamide.

17. Elongate element according to one of the preceding claims, characterized in that a string-like or a cord-like extension is fixed on its end or on the end of the attachment (AS).

18. Method of application in the case of an elongate element (LE) according to one of the preceding claims, characterized in that for the purpose of guidance an attachment (AS), having a length of at least 1 m, is fixed on the free end (EL) of the element, the flexibility of which attachment becomes increasingly greater in the direction of its free end (EA), in that at first this attachment (AS), and then the elongate element (LE) are introduced into the tube (RO), and in that the attachment (AS) is set in a fluttering movement by means of the flowing medium (SM).

**Revendications**

1. Elément (LE) oblong destiné à être introduit dans un conduit (RO), un fluide (SM) étant injecté sous pression dans le conduit (RO) et l'élément (LE) oblong étant porté et déplacé dans le conduit (RO) par les forces d'écoulement du fluide (SM) agissant sur sa surface, et un embout (AS), dont la flexibilité est supérieure à celle de l'élément (LE) oblong, étant disposé à l'extrémité de l'élément (LE) oblong caractérisé en ce que la longueur choisie de l'embout (AS) est choisie supérieure à 1 m,
   en ce que la flexibilité de l'embout (AS) augmente en direction de son extrémité (EA),
   et en ce que l'embout (AS) peut effectuer un mouvement de flottement sous l'effet du fluide (SM) qui s'écoule.

2. Elément oblong selon la revendication 1, caractérisé en ce que le diamètre de l'embout (AS) diminue en direction de l'extrémité libre (EA).

3. Elément oblong selon l'une quelconque des revendications précédentes, caractérisé en ce que le module d'élasticité de l'embout (AS) diminue en direction de l'extrémité libre (EA).

**4.** Elément oblong selon l'une quelconque des revendications précédentes, caractérisé en ce que le moment d'inertie géométrique de l'embout (AS) diminue en direction de l'extrémité libre (EA).

**5.** Elément oblong (LE) selon l'une quelconque des revendications précédentes, caractérisé en ce que la longueur de l'embout (AS) est choisie entre 1 et 20 m.

**6.** Elément oblong selon la revendication 5, caractérisé en ce que la longueur de l'embout (AS) est choisie entre 1 et 5 mètres.

**7.** Elément oblong selon l'une quelconque des revendications précédentes, caractérisé en ce que l'embout (AS) en un matériau élastique en flexion.

**8.** Elément oblong selon l'une quelconque des revendications précédentes, caractérisé en ce que l'extrémité libre (EA) de l'embout (AS) a un diamètre compris entre 0,1 et 1 mm.

**9.** Elément oblong selon l'une quelconque des revendications précédentes, caractérisé en ce que la flexibilité à l'extrémité (EA) de l'embout (AS) est choisie pour correspondre à 10 fois jusqu'à 100 fois la flexibilité du début de l'embout (AS).

**10.** Elément oblong selon l'une quelconque des revendications précédentes, caractérisé en ce que l'embout (AS) a à peu près la même section transversale que l'élément (LE) oblong au niveau du point de fixation sur la face frontale de l'extrémité (EL) de l'élément (LE) oblong.

**11.** Elément oblong selon l'une quelconque des revendications précédentes, caractérisé en ce que les caractéristiques mécaniques de l'embout (AS) correspondent à peu près à celles de l'élément (LE) oblong au niveau du point de fixation (SM) sur la face frontale de l'extrémité (EL) de l'élément (LE) oblong.

**12.** Elément oblong selon l'une quelconque des revendications précédentes, caractérisé en ce que l'embout (AS) est en une matière plastique.

**13.** Elément oblong selon l'une quelconque des revendications précédentes, caractérisé en ce que l'élément (LE) oblong est un conducteur ou un câble.

**14.** Elément oblong selon la revendication 13, caractérisé en ce que l'élément (LE) oblong est une fibre optique ou un câble optique.

**15.** Elément oblong selon l'une des revendications 13 ou 14, caractérisé en ce que, pour des câbles souples à gaine simple, l'embout (AS) est en un LDPE ou en polytétrafluoréthylène.

**16.** Elément oblong selon l'une des revendications 13 ou 14, caractérisé en ce que, pour des câbles à gaine stratifée, l'embout (AS) est en HDPE, en polypropylène ou en polyamide.

**17.** Elément oblong caractérisé en ce qu'à son extrémité ou à l'extrémité de l'embout (AS), selon l'une quelconque des revendications précédentes, il est prévu un prolongement du type ficelle ou cordon.

**18.** Procédé pour la mise en oeuvre d'un élément (LE) oblong selon l'une quelconque des revendications précédentes, caractérisé en ce que, sur l'extrémité libre (EL) de l'élément, il est prévu, à des fins de guidage, un embout (AS) d'au moins 1 m de longueur, dont la flexibilité augmente de plus en plus en direction de son extrémité libre (EA),

en ce que cet embout (AS) est introduit en premier dans le conduit (RO), puis l'élément (LE) oblong,

et en ce que l'embout (AS) est mis dans un mouvement de flottement par le fluide (SM) qui s'écoule.

# FIG 1

# FIG 2